# EUROPEAN PATENT APPLICATION

(11) **EP 4 808 035 A2**
(43) Date of publication of application: **16.09.2026**
(21) Application number: 26180465.2
(22) Date of filing: 02.08.2019
(51) Int. Cl.: H04L 5/00

(54) **TERMINAL AND RADIO COMMUNICATION METHOD**

(62) Document number(s) of the earlier application(s) in accordance with Art. 76 EPC: 19940567.1 / 4 009 722
(71) Applicant: NTT DOCOMO, INC., Tokyo 100-6150 (JP)
(72) Inventor: MATSUMURA, Yuki, Tokyo, 100-6150 (JP); KAKISHIMA, Yuichi, Tokyo, 100-6150 (JP); NAGATA, Satoshi, Tokyo, 100-6150 (JP)
(74) Representative: Hoffmann Eitle

(57) **Abstract**

A terminal according to one aspect of the present disclosure includes: a receiving section that receives a channel state information (CSI)-reference signal (RS) of at least one of a plurality of CSI-RSs each transmitted by using a plurality of antenna ports, the number of which is more than 32; and a control section that performs measurement by using the CSI-RS. According to one aspect of the present disclosure, the CSI-RS transmitted by using a larger number of CSI-RS ports can be appropriately measured.

## Description

### Technical Field

The present disclosure relates to a terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a radio communication system (for example, Rel. 15 NR), a plurality of channel state information (CSI)-reference signals (RSs) are multiplexed on each other by using at least one of time division multiplexing (TDM), frequency division multiplexing (FDM), and code division multiplexing (CDM), and are each transmitted by using a plurality of CSI-RS ports.

However, in future radio communication systems (for example, Rel. 16 or later versions), it is conceivable that the number of CSI-RS ports is deficient. When the number of CSI-RS ports is deficient, the terminal may not be able to appropriately measure the CSI-RS, and system performance may thus be deteriorated.

In the light of this, the present disclosure has one object to provide a terminal and a radio communication method that enable appropriate measurement of a CSI-RS transmitted by using a larger number of CSI-RS ports.

### Solution to Problem

A terminal according to one aspect of the present disclosure includes: a receiving section that receives a channel state information (CSI)-reference signal (RS) of at least one of a plurality of CSI-RSs each transmitted by using a plurality of antenna ports, the number of which is more than 32; and a control section that performs measurement by using the CSI-RS. Advantageous Effects of Invention

According to one aspect of the present disclosure, the CSI-RS transmitted by using a larger number of CSI-RS ports can be appropriately measured.

### Brief Description of Drawings

FIGS. 1A and 1B are each a diagram to show an example of a transmission and reception configuration in which beam management is used;
FIG. 2 is a diagram to show prediction of development of MIMO technology;
FIGS. 3A and 3B are each a diagram to show an example of operation of beams;
FIG. 4 is a diagram to show an example of CSI-RS positions in a slot;
FIG. 5A to FIG. 5D are each a diagram to show an example of an FD-OCC and a TD-OCC;
FIG. 6 is a diagram to show an example of a CSI-RS position(s) for each number of ports;
FIG. 7 is a diagram to show an example of mapping of a CSI-RS corresponding to 32 ports;
FIGS. 8A and FIG. 8B are each a diagram to show an example of a CSI-RS to which an inter-PRB OCC is applied;
FIG. 9A to FIG. 9C are each a diagram to show an example of the inter-PRB OCC;
FIGS. 10A and FIG. 10B are each a diagram to show an example of overlap of an old release CSI-RS and a new release CSI-RS;
FIG. 11 is a diagram to show an example of CSI-RS measurement operation of a UE in which the inter-PRB OCC is not configured;
FIG. 12 is a diagram to show an example of the CSI-RS to which an inter-slot OCC is applied;
FIG. 13 is a diagram to show an example of existing CSI-RS resources and additional CSI-RS resources;
FIG. 14 is a diagram to show an example of an additional OCC applied over the existing CSI-RS resources and the additional CSI-RS resources;
FIG. 15 is a diagram to show an example of a case in which at least one of time and frequency is different between the existing CSI-RS resources and the additional CSI-RS resources;
FIG. 16 is a diagram to show an example of a case in which at least one of a sequence and a scramble ID is different between the existing CSI-RS resources and the additional CSI-RS resources;
FIG. 17 is a diagram to show an example of a schematic structure of a radio communication system according to one embodiment;
FIG. 18 is a diagram to show an example of a structure of a base station according to one embodiment;
FIG. 19 is a diagram to show an example of a structure of a user terminal according to one embodiment; and
FIG. 20 is a diagram to show an example of a hardware structure of the base station and the user terminal according to one embodiment.

### Description of Embodiments

### (Beam Management)

In NR, a method of beam management is introduced. For example, for NR, forming (or using) beams in at least one of a base station and a terminal (user equipment (UE)) has been under study.

Through application of beam forming (BF), it is expected that difficulty in securing coverage due to increase in carrier frequency be reduced, and radio wave propagation loss be reduced.

BF is, for example, a technique in which a beam (antenna directivity) is formed by controlling (also referred to as precoding) amplitude/phase of a signal that is transmitted or received from each element by using an ultra multi-element antenna. Note that Multiple Input Multiple Output (MIMO) using such an ultra multi-element antenna is also referred to as massive

### MIMO.

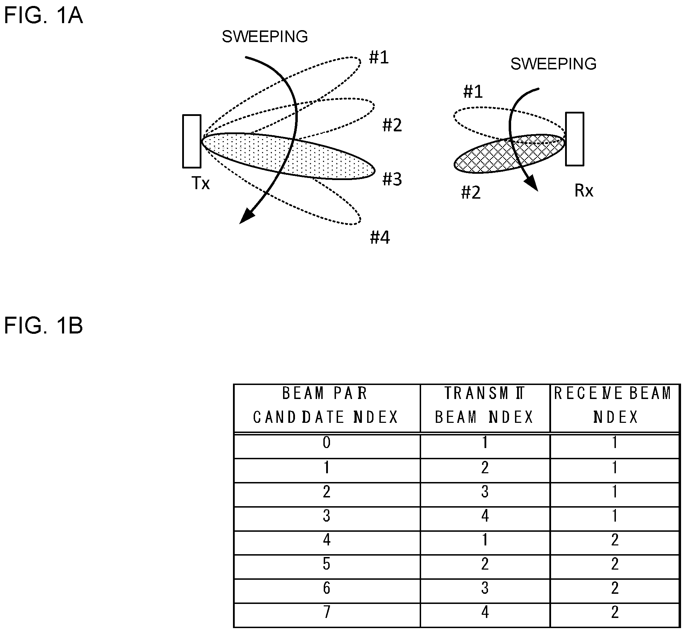

FIGS. 1A and 1B are each a diagram to show an example of a transmission and reception configuration in which beam management is used. The present example assumes a system in which a transmitter (Tx) side can form four beams (transmit beams #1 to #4), and a receiver (Rx) side can form two beams (receive beams #1 to #2).

In such a system, it is preferable that, as shown in FIG. 1A, sweeping of beams be performed in both of transmission and reception, and control be performed so that an appropriate pair is selected out of candidates of a total of eight patterns of transmit and receive beam pairs shown in FIG. 1B.

The pair of the transmit beam and the receive beam may be referred to as a beam pair, and for example, transmit beam #3 and receive beam #2 as shown in FIG. 1A may be identified as a beam pair candidate index = 6 of FIG. 1B.

Note that, in beam management, a single beam is not used, and a plurality of levels of beam control, such as a rough beam and a fine beam, may be performed.

BF can be categorized into digital BF and analog BF. Digital BF and analog BF may be referred to as digital precoding and analog precoding, respectively.

Digital BF is, for example, a method in which precoding signal processing is performed on a baseband (for a digital signal). In this case, as many parallel processings, such as inverse fast Fourier transform (IFFT), digital to analog conversion (Digital to Analog Converter (DAC)), and Radio Frequency (RF), as the number of antenna ports (or RF chains) are required. At the same time, as many beams as the number of RF chains can be formed at any timing.

Analog BF is, for example, a method in which a phase shifter is used in RF. In analog BF, a plurality of beams cannot be formed at the same timing; however, a configuration thereof is easy and can be implemented at a low cost because it is only necessary that phase of RF signals be rotated.

Note that a hybrid BF configuration, which is a combination of digital BF and analog BF, can be implemented as well. In NR, introduction of massive MIMO has been under study. When forming of a great number of beams is intended to be performed by means of only digital BF, however, a circuit configuration costs much. Thus, use of the hybrid BF configuration is also assumed.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (which may be referred to as a signal/channel; hereinafter, in a similar manner, "A/B" may be interpreted as "at least one of A and B") based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter

Types A to C may correspond to QCL information related to synchronization processing of at least one of time and frequency, and type D may correspond to QCL information related to beam control.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another downlink reference signal (DL-RS)). The TCI state may be configured (indicated) by higher layer signaling or physical layer signaling, or a combination of these.

In the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

Further, the RS (DL-RS) to have a QCL relationship with the channel may be, for example, at least one of a synchronization signal block (SSB), a channel state information reference signal (CSI-RS), and a reference signal for measurement (Sounding Reference Signal (SRS)). Alternatively, the DL-RS may be a CSI-RS used for tracking (also referred to as a Tracking Reference Signal (TRS)), or a reference signal used for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the DL-RS to have a QCL relationship (DL-RS relation information) and information indicating a QCL type (QCL type information). The DL-RS relation information may include information such as an index of the DL-RS (for example, an SSB index, or a non-zero power CSI-RS (NZP CSI-RS) resource ID (Identifier)), an index of a cell in which the RS is located, and an index of a Bandwidth Part (BWP) in which the RS is located.

### (Development of MIMO Technology and Beam)

Incidentally, the MIMO technology has hitherto been used in a frequency bandwidth (or a frequency band) lower than 6 GHz. However, application even to a frequency band higher than 6 GHz in future has been under study.

Note that the frequency band lower than 6 GHz may be referred to as sub-6, frequency range (FR) 1, or the like. The frequency band higher than 6 GHz may be referred to as above-6, FR 2, a millimeter wave (mmW), FR 4, or the like.

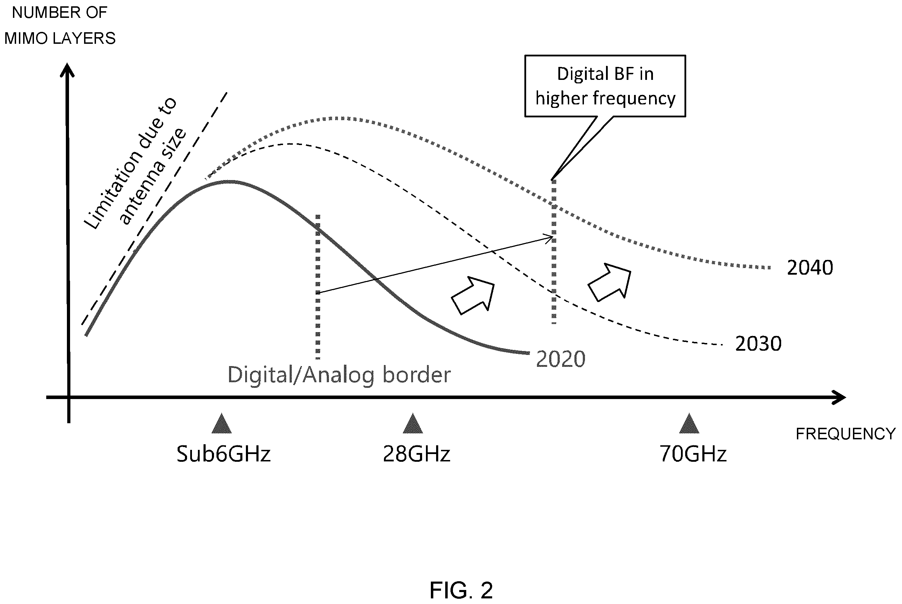

FIG. 2 is a diagram to show prediction of development of the MIMO technology. FIG. 2 shows an example in which how many MIMO layers can be implemented in each frequency in each decade (for example, 2020s, 2030s, and 2040s), with the horizontal axis representing frequency and the vertical axis representing the number of MIMO layers. It is assumed that the maximum number of MIMO layers is limited by an antenna size.

For example, the line of 2020s shows that the number of layers is the largest in a frequency band of around sub-6 GHz, and the number of layers is considerably small in a high frequency band such as 28 GHz. Further, there is an application boundary of digital precoding and analog precoding around the middle of these frequency bands. In this decade, it is assumed that communication of sub-6 GHz can be implemented by using digital precoding, but communication around 28 GHz cannot be implemented. Note that analog precoding may be able to be applied regardless of the frequency band.

In around 2030s, it is assumed that, through adaptation of an advanced technique such as nonlinear precoding, the number of MIMO layers is generally increased, and in addition, precoding can be applied even in a higher frequency band. Thus, it is expected a line obtained by extending the line of 2020s in the upper right direction of the figure is the line of 2030s.

It is expected that the line of 2040s is a line obtained by extending the line of 2030s further in the upper right direction of the figure. In this decade, it is expected that communication of sub-6 GHz can be implemented by using digital precoding even in a frequency band higher than 28 GHz. It is assumed that the application boundary of digital precoding is shifted to a frequency band by far higher than that of 2020s.

It is expected that, even with mmW, through the use of MIMO of a higher order as well as cooperation of a plurality of UEs, the degree of freedom and diversity of MIMO multiplexing are enhanced, which further leads to enhancement of throughput.

In this manner, it is assumed that, in future radio communication systems (for example, NR of Rel-17 or later versions), even in a high frequency (for example, FR 2), operation of only the digital beam without the use of the analog beam (which may be referred to as full digital operation) is used and operation implementing dominant use of the digital beam are used.

For example, in a case of the full digital operation, by simultaneously applying orthogonal precoding (or an orthogonal beam, a digital beam) to a plurality of UEs, improvement of spectral efficiency can be expected. When the digital beam cannot be appropriately applied, interference between the UEs is increased, which leads to deterioration of communication quality (or reduction of cell capacity). Note that orthogonality according to the present disclosure may be interpreted as semi-orthogonality.

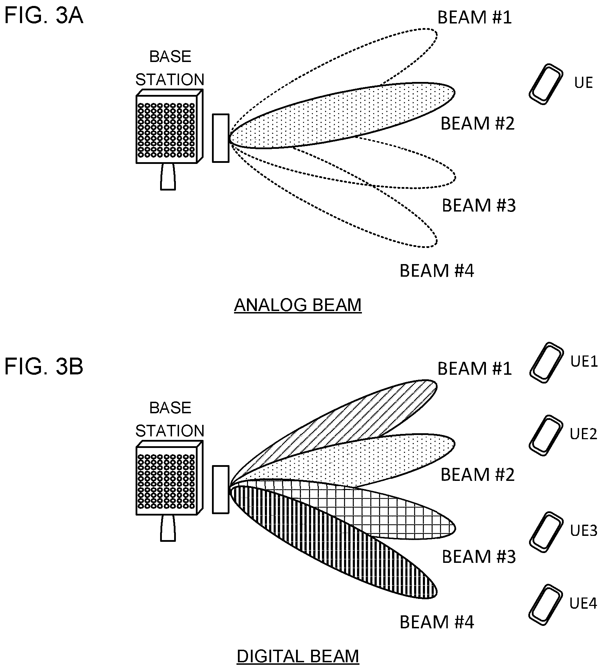

FIGS. 3A and 3B are each a diagram to show an example of operation of beams. In the present example, FR 2 is assumed. However, the frequency range of the present disclosure is not limited to this. FIG. 3A shows an operation of the analog beams that are also used in Rel-15, and FIG. 3B shows an operation of the digital beams that are used in Rel-17 or later versions.

In FIG. 3A, the base station (which may be interpreted as a transmission/reception point (TRP), a panel, or the like) can only transmit one beam (beam #2 in FIG. 3A) at certain time. Thus, the base station performs transmission and reception by switching beams for the UE.

In FIG. 3B, the base station can transmit a plurality of beams (beams #1 to #4 in FIG. 3B) at certain time. Thus, the base station can perform transmission and reception to and from a plurality of UEs by using different beams simultaneously.

Even if the base station adopts full digital, the UE according to Rel-15 ought to be accommodated (supported) as far as the UE according to Rel-15 is present.

### (Antenna Ports for Reference Signals)

In Rel. 15, the DMRS corresponding to a plurality of ports are multiplexed by using at least one of FDM, a cyclic shift (a CS, a frequency domain orthogonal cover code (OCC), an orthogonal sequence), and a time domain OCC (only a double symbol DMRS). A type 1 DMRS supports a maximum of 8 ports, and a type 2 DMRS supports a maximum of 12 ports.

In Rel. 15, multiplexing is performed by using at least one of the CSI-RS corresponding to a plurality of ports, FDM, TDM, the frequency domain OCC, and the time domain OCC. The CSI-RS supports a maximum of 32 ports.

The DMRS or the CSI-RS corresponding to a plurality of ports is, for example, used for orthogonalization of multi-input multi-output (MIMO) layers. For example, for single user MIMO, a different DMRS port is configured for each layer. For multi user MIMO, a different DMRS port is configured for each layer in one UE and for each UE.

Although the CSI-RS is similar to the DMRS, through the use of the CSI-RS ports as many as or more than the number of layers used for data, more accurate channel states can be measured, and throughput may be able to be improved.

In Rel. 15, the CSI-RS supports a maximum of 32 ports by using at least one of the time domain OCC, the frequency domain OCC (a maximum of 4 for the time direction, a maximum of 2 for the frequency direction), FDM, and TDM.

### (CSI-RS)

In Rel. 15, as the DL RS for at least one of channel state information (CSI) acquisition, beam management (BM), beam failure recovery (BFR), and fine tracking of time and frequencies, for example, the CSI-RS is used. The CSI-RS supports 1, 2, 4, 8, 12, 16, 24, or 32 ports (antenna ports, CSI-RS ports). The CSI-RS supports periodic, semi-persistent, and aperiodic transmissions. In order to adjust overhead and CSI estimation accuracy, frequency density of the CSI-RS can be configured.

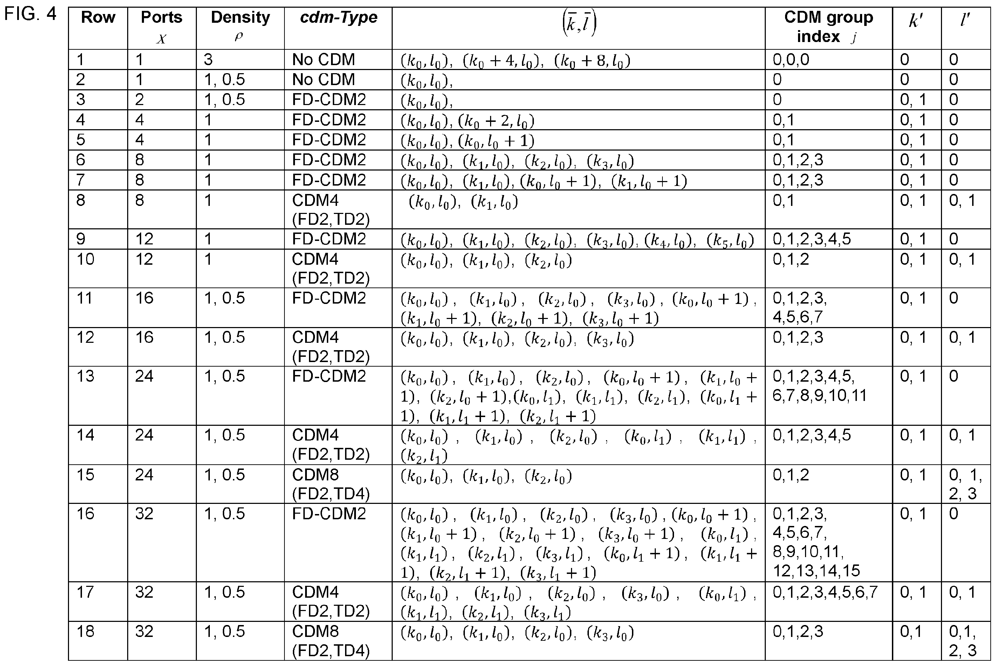

FIG. 4 is a diagram to show an example of CSI-RS positions (locations) in a slot. Each row in the table indicates a row number, the number of ports, frequency domain density, a CDM type, (time/frequency) positions of time and frequencies (positions of component resources (k bar, l bar)), a code division multiplexing (CDM) group index, and each resource position ((RE, symbol), (k', l')) in the component resources. Here, the time/frequency position is a position of a resource (component resource) of the time and frequency of the CSI-RS corresponding to one port. k bar is representation in which "k" is denoted with an overline. k bar represents a start resource element (RE) index of the component resource, and l bar represents a start symbol (OFDM symbol) index of the component resource.

The CDM group includes no CDM (without CDM, N/A), FD-CDM2, CDM4, and CDM8. In FD-CDM2, the frequency domain (FD)-orthogonal cover code (OCC) having a length of 2 is multiplied in the unit of RE, to thereby multiplex the CSI-RS corresponding to two ports on the same time and frequency (FD2). In CDM4, the FD-OCC having a length of 2 and the time domain (TD)-OCC having a length of 2 are multiplied in the unit of the RE and in the unit of symbol, to thereby multiplex the CSI-RS corresponding to four ports on the same time and frequency (FD2TD2). In CDM8, the FD-OCC having a length of 2 and the TD-OCC having a length of 4 are multiplied in the unit of RE and in the unit of symbol, to thereby multiplex the CSI-RS corresponding to eight ports on the same time and frequency (FD2TD4).

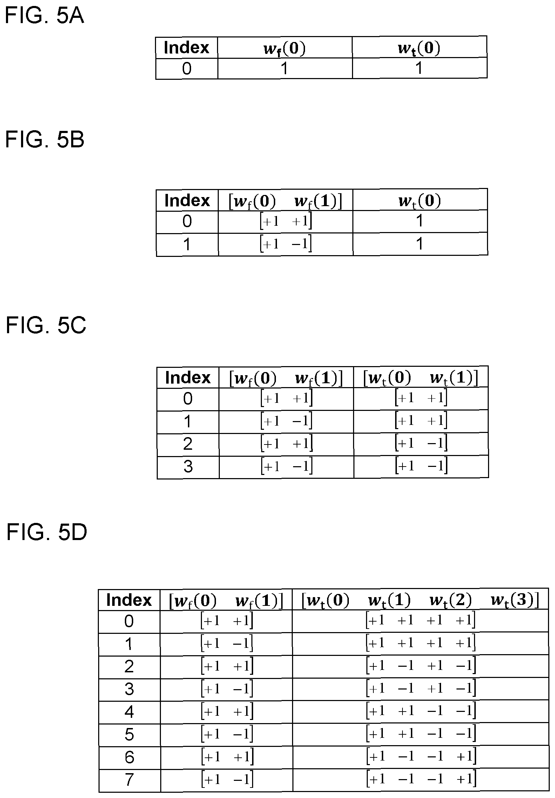

FIG. 5A to FIG. 5D are each a diagram to show an example of the FD-OCC and the TD-OCC. The sequence of the FD-OCC is represented by w_{f}(k'), and the sequence of the TD-OCC is represented by wₜ(k'). FIG. 5A shows a case in which the CDM type is no CDM. FIG. 5B shows a case in which the CDM type is FD-CDM2. FIG. 5C shows a case in which the CDM type is CDM4. FIG. 5D shows a case in which the CDM type is CDM8.

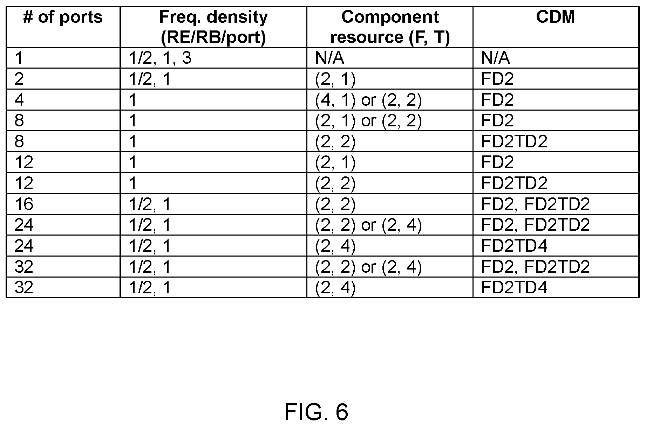

FIG. 6 is a diagram to show an example of a CSI-RS position(s) for each number of ports, based on FIG. 4. The figure shows, for each number of ports, the frequency density, the component resource size (the size [RE] in the frequency direction, the size [symbol] in the time direction), and the CDM type.

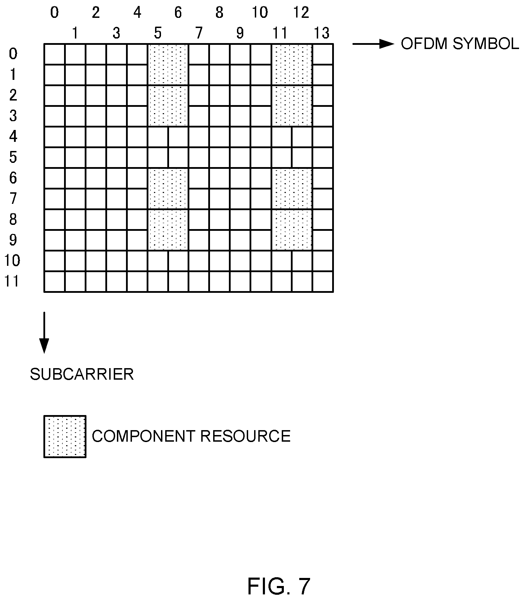

For example, FIG. 7 shows an example of resource element (RE) mapping of the CSI-RS in which the number of ports is configured to 32 and the component resource size is configured to two subcarriers × two symbols (row index 17 of FIG. 4). In the frequency domain and the time domain of one physical resource block (PRB) × one slot, when four component resources each including two subcarriers × two symbols are multiplexed in the frequency domain (frequency division multiplexing (FDM)) and two of such component resources are multiplexed in the time domain (time division multiplexing (TDM)), 4 × 2 component resources are mapped. In addition, when the FD-OCC having a length of two subcarriers and the TD-OCC having a length of two symbols are multiplied on the CSI-RS in each component resource, four CSI-RSs are multiplexed (code division multiplexing (CDM)) (CDM4, FD2TD2). Thus, the CSI-RS corresponding to 32 ports is transmitted in the resource of one PRB × one slot.

When the maximum number 32 of the ports of the CSI-RS is larger than the maximum number 8 of the layers, the UE can measure a large number of channel states, and can enhance measurement accuracy.

However, in future radio communication systems (for example, Rel. 16 or later versions), it is conceivable that the number of CSI-RS ports is deficient.

When CSI-RSs for a plurality of UEs are multiplexed, it is preferable that different CSI-RS ports be applied to (configured for) the plurality of respective UEs, because orthogonality may be collapsed even when different beams (for example, analog beams, or precoding) are applied to the plurality of respective UEs. In order that different CSI-RSs are applied to a plurality of UEs, it is preferable that the number of CSI-RS ports be increased.

It is conceivable that the number of configured CSI-RS ports is different depending on a terminal, and CSI-RSs for a plurality of UEs with the number of CSI-RS ports being different from each other are multiplexed. For example, in one serving cell, when multiplexing is performed for an old release (for example, Rel. 15) UE and a new release (for example, releases later than Rel. 15, or Rel. 16 or later versions) UE, it is conceivable that the number of CSI-RS ports is deficient.

By using a large number of CSI-RS ports, channel measurement accuracy is enhanced.

In the light of this, the inventors of the present invention came up with the idea of a method for increasing the CSI-RS.

Embodiments according to the present disclosure will be described below in detail with reference to the drawings. A radio communication method according to each embodiment may be applied individually, or may be applied in combination of at least two.

For example, when the old release UE and the new release UE coexist in one serving cell, spectral efficiency can be enhanced through multiplexing of an old release CSI-RS and a new release CSI-RS in the same PRB.

Note that each embodiment is not limited to sharing of the CSI-RS ports (port sharing) between the old release UE and the new release UE. Each embodiment may be applied to sharing of the CSI-RS ports between a plurality of UEs having different numbers of CSI-RS ports.

In the present disclosure, a port, a CSI-RS port, and an antenna port may be interchangeably interpreted as each other. In the present disclosure, a CSI-RS resource, a CSI-RS configuration, and a time and frequency resource for a CSI-RS may be interchangeably interpreted as each other.

In the present disclosure, a beam, precoding, quasi co-location (QCL) assumption, a QCL relationship, a transmission configuration indicator (TCI) state, a spatial domain filter spatial domain reception filter, and a reference signal (RS) may be interchangeably interpreted as each other.

In the present disclosure, an existing CSI-RS resource and a CSI-RS resource according to Rel. 15 may be interchangeably interpreted as each other. An additional CSI-RS resource, a CSI-RS resource not according to Rel. 15, and a CSI-RS resource added in a new release may be interchangeably interpreted as each other.

In the present disclosure, to apply the OCC to the CSI-RS and to multiply the CSI-RS by the OCC may be interchangeably interpreted as each other. In the present disclosure, to apply the OCC to a receive signal, to multiply a receive signal by an inter-PRB OCC, and to divide a receive signal by an inter-PRB OCC may be interchangeably interpreted as each other.

### (Radio Communication Method)

### <First Embodiment>

### <<Inter-PRB OCC>>

An OCC (frequency domain OCC, inter-PRB OCC) over a plurality of PRBs may be applied to the CSI-RS. Each value (element) in the inter-PRB OCC may be applied for each PRB. Each value in the inter-PRB OCC may be applied for each of more than one PRBs. Each value in the inter-PRB OCC may be applied for each precoding resource block group (PRG).

The PRG may be contiguous PRBs to which the same precoding in the DL is applied. The UE may assume that the same precoding is applied to contiguous DL allocations of a plurality of PRBs in the PRG.

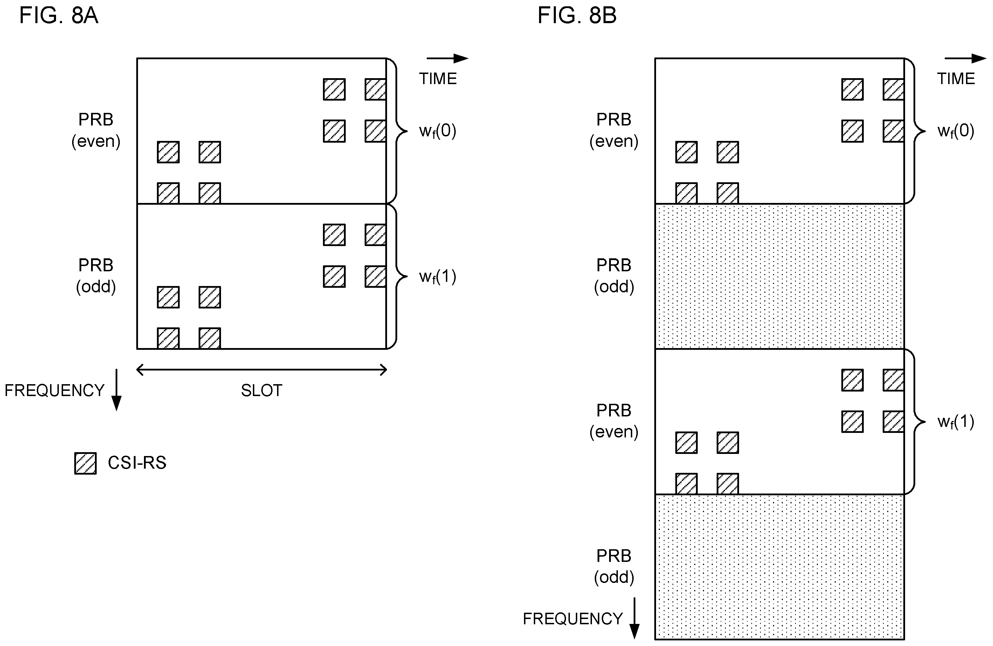

The inter-PRB OCC may be applied to contiguous PRBs. For example, as shown in FIG. 8A, the inter-PRB OCC having a length of 2 may be applied to PRB #0 and PRB #1.

The inter-PRB OCC may be applied to non-contiguous PRBs. The non-contiguous PRBs may be PRBs having even-numbered PRB indexes out of a plurality of PRBs configured for the CSI-RS resources, may be PRBs having odd-numbered PRB indexes out of a plurality of PRBs configured for the CSI-RS resources, may be PRBs having intervals of a certain number of PRBs out of a plurality of PRBs configured for the CSI-RS resources, may have a Comb configuration for a plurality of PRBs configured for the CSI-RS resources, or may be defined in order from the lowest PRB (the PRB having the smallest index) or the highest PRB (the PRB having the largest index) out of a plurality of PRBs configured for the CSI-RS resources.

For example, as shown in FIG. 8B, the inter-PRB OCC [w_{f}(0) w_{f}(1)] having a length of 2 may be applied to PRB #0 and PRB #2 having even-numbered PRB indexes. [wf₍0) w_{f}(1)] may be [+1 +1] or [+1 -1].

When the CSI-RS is mapped to only the PRBs having odd-numbered PRB indexes or the PRBs having even-numbered PRB indexes, the inter-PRB OCC need not be applied. When the CSI-RS is mapped to only the PRBs having odd-numbered PRB indexes or the PRBs having even-numbered PRB indexes, the inter-PRB OCC may be applied.

For each inter-PRB OCC length, association (for example, a table) between an OCC index i and a value of the inter-PRB OCC may be defined. Each value of the inter-PRB OCC may be defined by using a cyclic shift α (for example, exp(jα · m), exp(j2πφ(m)/N), or the like).

When the inter-PRB OCC length is 2, the inter-PRB OCC may be the time domain OCC (double symbol OCC) according to Rel. 15. The inter-PRB OCC may be defined by using cyclic shift α = {0, π}.

When the inter-PRB OCC length is 4, the inter-PRB OCC may be defined by using a table, or may be defined by using a cyclic shift. The inter-PRB OCC may be defined by using cyclic shift α = {0, π/2, π, 3π/2}.

When the inter-PRB OCC length is 3, the inter-PRB OCC may be defined by using cyclic shift α = {0, π/3, 2π/3}, or may be defined by using a table including values that are obtained from the cyclic shift. The cyclic shift α may be {0, -π/3, -2π/3}.

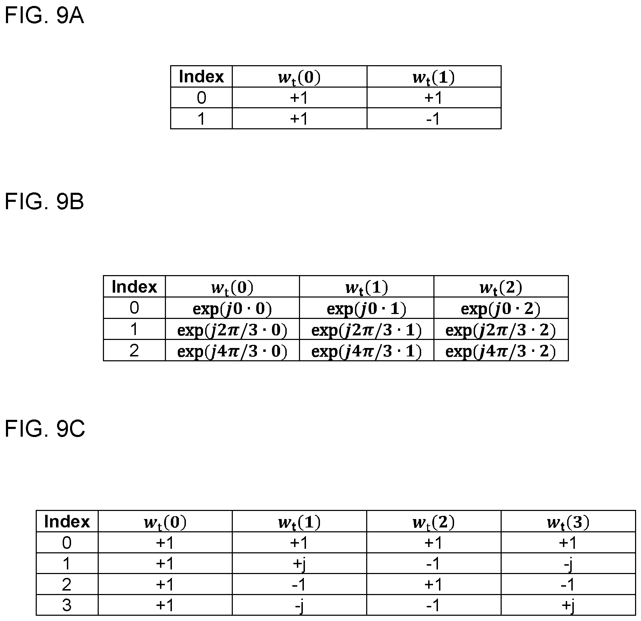

For example, the CSI-RS to which the inter-PRB OCC [+1 +1] having OCC index = 0 is applied based on the table of FIG. 9A is the same as the CSI-RS to which the inter-PRB OCC is not applied, and is thus received and measured through operation the same as that according to Rel. 15, and is received by the UE according to Rel. 15 and the new release UE. The CSI-RS to which the inter-PRB OCC [+1 -1] having OCC index = 1 is applied is received and measured only by the new release UE.

For example, the CSI-RS to which the inter-PRB OCC [exp(j0 · 0) exp(j0 · 1) exp(j0 · 2)] (same as [+1 +1 +1]) having OCC index = 0 is applied based on the table of FIG. 9B is the same as the CSI-RS to which the inter-PRB OCC is not applied, and is thus received and measured through operation the same as the operation according to Rel. 15, and is received by the UE according to Rel. 15 and the new release UE. The CSI-RS to which the inter-PRB OCC having OCC index = 1 and 2 is applied is received and measured only by the new release UE.

For example, the CSI-RS to which the inter-PRB OCC [+1 +1 +1 +1] having OCC index = 0 is applied based on the table of FIG. 9C is the same as the CSI-RS to which the inter-PRB OCC is not applied, and is thus received and measured through operation the same as that according to Rel. 15, and is received by the UE according to Rel. 15 and the new release UE. The CSI-RS to which the inter-PRB OCC having OCC index = 1, 2, and 3 is applied is received and measured only by the new release UE.

### <<UE Operation>>

The UE (for example, the new release UE) that supports the inter-PRB OCC may multiply the value in the inter-PRB OCC for each PRB, and measure the CSI-RS that is obtained by adding (in-phase synthesis) a plurality of results obtained through the multiplication.

The UE (for example, the old release UE) that does not support the inter-PRB OCC or for which the inter-PRB OCC is not configured may measure the CSI-RS that is obtained by adding receive signals of each of the plurality of PRBs.

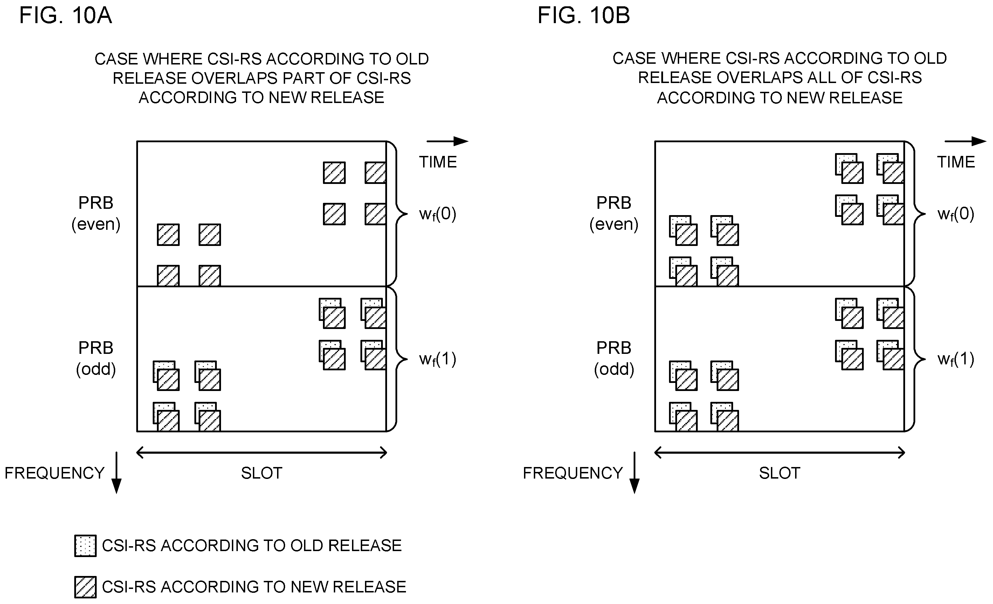

The UE need not assume that only a part overlaps between the time and frequency resources of the CSI-RS to which the inter-PRB OCC is applied and the time and frequency resources of the CSI-RS of another UE. For example, as shown in FIG. 10A, the UE need not assume a case in which the new release CSI-RS is mapped to PRBs #0 and 1 and the inter-PRB OCC is applied, and the old release CSI-RS is mapped to PRB #1. In such a case, the new release CSI-RS and the old release CSI-RS are not orthogonal to each other (cannot be separated by the UE).

All of the time and frequency resources of the CSI-RS to which the inter-PRB OCC is applied and all of the time and frequency resources of the CSI-RS of another UE may overlap. For example, as shown in FIG. 10B, the new release CSI-RS may be mapped to PRBs #0 and 1 and the inter-PRB OCC may be applied, and the old release CSI-RS may be mapped to PRBs #0 and 1. In such a case, the new release CSI-RS and the old release CSI-RS are orthogonal to each other (can be separated by the UE).

A transmission bandwidth (number of PRBs) of the CSI-RS may be a multiple of the inter-PRB OCC length. The UE may assume that the transmission bandwidth (number of PRBs) of the CSI-RS is a multiple of the inter-PRB OCC length. The UE may measure the CSI-RS by applying the inter-PRB OCC over a bandwidth of a multiple of the inter-PRB OCC length.

By adding the receive signals for each PRB over a multiple of the inter-PRB OCC length, the old release UE can measure only the CSI-RS to which the inter-PRB OCC is not applied (corresponding to the inter-PRB OCC having a value of all + 1), and can remove the CSI-RS corresponding to other inter-PRB OCCs.

When the transmission bandwidth of the CSI-RS is not a multiple of the inter-PRB OCC length, the UE may measure only the bandwidth of a multiple of the inter-PRB OCC length out of the CSI-RS and need not measure the other bands. For example, when the inter-PRB OCC length is 2, the UE may perform measurement by applying the inter-PRB OCC to the receive signal of the CSI-RS resources for every two PRBs (may apply the value corresponding to the inter-PRB OCC to the receive signal of each of the two PRBs). The UE need not measure the other bands smaller than the two PRBs.

Even in the case as shown in FIG. 10B described above, unless the old release UE knows the inter-PRB OCC length, the old release UE may not be able to appropriately measure the CSI-RS, with the result that the new release CSI-RS may be interference.

When there is no channel change for a plurality of CSI-RSs transmitted by using the same precoding, measurement accuracy of the CSI-RSs is enhanced by performing in-phase synthesis on those CSI-RSs.

The old release UE may perform in-phase synthesis on the receive signals (complex number) of the CSI-RSs for each PRB in the PRG. Through the operation, even if the old release UE does not know the fact that the inter-PRB OCC is applied, the CSI-RSs can be measured through reception operation the same as that of a case in which the inter-PRB OCC of all + 1 is applied. Consequently, the old release CSI-RS and the new release CSI-RS are subjected to orthogonalization.

The inter-PRB OCC length may be the number of PRBs in the PRG. The CSI-RS may be mapped to all of the PRBs in the PRG, and the inter-PRB OCC may be applied.

The inter-PRB OCC length may be the number of PRBs to which the CSI-RS of the PRG is mapped. For example, it is assumed that one PRG includes four PRBs, the CSI-RS is mapped to two PRBs in the PRG, and the inter-PRB OCC length is 2. In this case, by measuring the CSI-RS by performing in-phase synthesis on the receive signals of the CSI-RS in the PRG, the old release UE performs reception operation corresponding to that of a case in which the inter-PRB OCC [+1 +1] is applied even if the old release UE does not know that the inter-PRB OCC is applied. In this manner, the old release UE can reduce interference of the new release CSI-RS and measure the old release CSI-RS. In this case, the new release UE knows that the inter-PRB OCC has been applied, and thus the new release UE measures the CSI-RS by applying the inter-PRB OCC [+1 -1] and performing in-phase synthesis on the receive signals of the CSI-RS in the PRG. In this manner, the new release UE can reduce interference of the old release CSI-RS and measure the new release CSI-RS.

When the number of PRBs in the PRG is not a multiple of the inter-PRB OCC length, the UE may measure only the bandwidth of a multiple of the inter-PRB OCC length out of the PRG, and need not measure the other bands.

### [Measurement of Entire Resource Range]

In the same time and frequency resources as the CSI-RS to which the inter-PRB OCC is applied or the CSI-RS to which the inter-PRB OCC is not applied, the CSI-RS to which the inter-PRB OCC is applied may be transmitted to another UE. The UE may measure the CSI-RS corresponding to a specific inter-PRB OCC by receiving the CSI-RS in the resource range (for example, the band) to which the inter-PRB OCC may be applied.

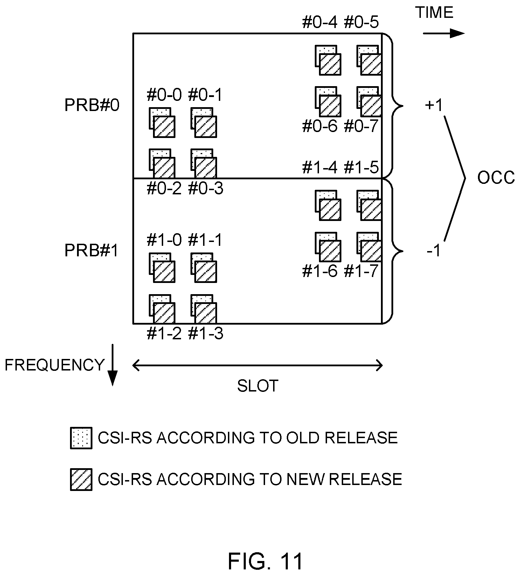

In the example of FIG. 11, CSI-RS #0-0 in PRB #0 and CSI-RS #1-0 in PRB #1 are mapped to the same position in the same slot in each PRB, and include the same CSI-RS sequence (transmit signal sequence).

The UE for which the CSI-RS resources to which the inter-PRB OCC (for example, [+1 +1]) having the value of all + 1 is applied are configured or the UE for which the CSI-RS resources to which the inter-PRB OCC is not applied are configured may measure the CSI-RS in each PRB without using the inter-PRB OCC, if the CSI-RS of another UE multiplexed on the time and frequency resources of the CSI-RS is not transmitted.

If there is a possibility that the inter-PRB OCC is applied, the UE cannot accurately measure the CSI-RS in each PRB unless the UE knows the inter-PRB OCC.

In the resource range in which there is a possibility that the inter-PRB OCC is applied, by applying a specific inter-PRB OCC having the value of all + 1 to the receive signals of the entire resource range, the UE may measure the CSI-RS corresponding to the specific inter-PRB OCC.

The resource range in which there is a possibility that the inter-PRB OCC is applied may be defined in a specification, or may be configured for the UE by using higher layer signaling. The resource range may be represented in the unit of two PRBs (a pair of an even-numbered PRB index and an odd-numbered PRB index), in the unit of three PRBs, or in the unit of four PRBs. The UE may determine the resource range in which the inter-PRB OCC is applied, based on the band (PRB) of the configured CSI-RS resources.

Whether or not the inter-PRB OCC is applied may be reported to the UE by using at least one of higher layer signaling, the MAC CE, and the DCI. The UE may switch reception operations according to the reporting. For example, the UE that has received reporting that the inter-PRB OCC is not applied (or that the CSI-RS for another UE is not multiplexed on the time and frequency resources of the CSI-RS) may measure the CSI-RS in each of at least one PRB in the resource range, or may perform in-phase synthesis on a plurality of PRBs in the CSI-RS resources. For example, the UE that has received reporting that the inter-PRB OCC is applied (or that the CSI-RS for another UE is multiplexed on the time and frequency resources of the CSI-RS) may identify the inter-PRB OCC, based on the receive signals of all of the PRBs, and measure the CSI-RS to which the identified inter-PRB OCC is applied.

According to the present embodiment, by applying the inter-PRB OCC to the CSI-RS over a plurality of PRBs, the number of CSI-RSs (ports) to be subjected to orthogonalization (to be multiplexed) can be increased.

### <Second Embodiment>

### <<Inter-Time Field OCC>>

The OCC (time domain OCC, inter-time field OCC) over a plurality of time fields in the time domain may be applied to the CSI-RS. Each value (element) in the inter-time field OCC may be applied for each time field (period). The time field may be any one of a subframe, a slot, a sub-slot, a mini-slot, and a symbol. The time field need not be longer than the symbol.

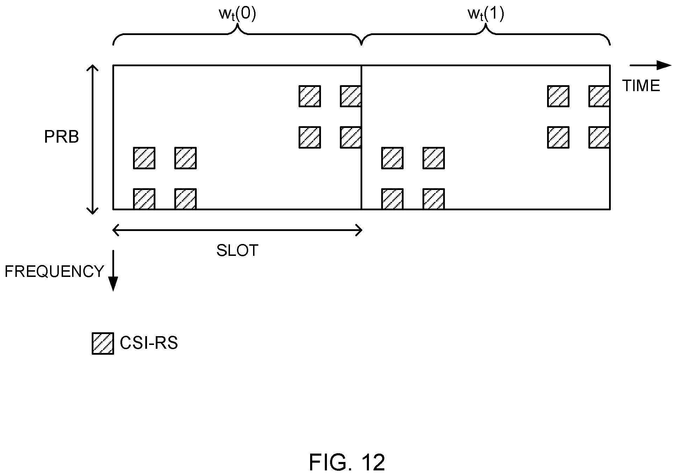

The inter-time field OCC may be applied to contiguous time fields. For example, as shown in FIG. 12, the time field may be the slot, and an inter-slot OCC [wₜ(0) wₜ(1)] having a length of 2 may be applied to slot #0 and slot #1. [wt₍0) wₜ(1)] may be [+1 +1] or [+1 -1].

In a manner similar to the inter-PRB OCC according to the first embodiment, for the inter-time field OCC, association (for example, a table) between an OCC index i and a value of the inter-time field OCC may be defined for each inter-time field OCC length. Each value of the inter-time field OCC may be defined by using a cyclic shift α (for example, exp(jα · m), exp(j2πφ(m)/N), or the like). When the OCC length is 2, each value of the inter-time field OCC may be defined by using cyclic shift α = {0, π}. When the OCC length is 3, the OCC may be defined by using cyclic shift α = {0, π/3, 2π/3}, or may be defined by using a table including values that are obtained from the cyclic shift. The cyclic shift α may be {0, -π/3, -2π/3}. When the OCC length is 4, the OCC may be defined by using a table, or may be defined by using cyclic shift α = {0, π/2, π, 3π/2}. In a manner similar to the case in which the OCC length is 3, the order of the values of the cyclic shift α may be interchanged with each other.

The inter-time field OCC may be applied to non-contiguous time fields. The non-contiguous time fields may be a plurality of time fields having even-numbered indexes out of a period configured for the CSI-RS resource, may be a plurality of time fields having odd-numbered indexes out of a period configured for the CSI-RS resource, may be a plurality of time fields having intervals of a certain number of time fields out of a period configured for the CSI-RS resource, or may be defined in order from the first (having the smallest index) time field or the last (having the largest index) time field out of a period configured for the CSI-RS resources.

When the CSI-RS is mapped to only the time field having an odd-numbered index or the time field having an even-numbered index, the inter-time field OCC need not be applied. When the CSI-RS is mapped to only the time field having an odd-numbered index or the time field having an even-numbered index, the inter-time field OCC may be applied. In this case, orthogonality other than the inter-time field OCC can be maintained, and deterioration of measurement quality can be prevented.

The inter-time field OCC length may be the number of time fields (for example, slots) in an application period (for example, a radio frame) including a given number of time fields.

In the application period, when sequence hopping of the CSI-RS is performed, a case in which orthogonality between a plurality of inter-time field OCCs multiplexed in the application period is collapsed is conceivable. In view of this, in the resource range to which the inter-time field OCC may be applied, sequence hopping may be stopped.

The CSI-RS sequence may be a pseudo-random sequence (pseudo-noise (PN) sequence, for example, a Gold sequence, a Gold sequence of length 31, or an M sequence). In Rel. 15, an initial value cᵢₙᵢₜ used for determination of the CSI-RS sequence is based on a slot index and a symbol index.

When the inter-time field OCC (inter-slot OCC) is applied between slots over the application period, sequence hopping in the application period may be stopped (cᵢₙᵢₜ of the first or last symbol may be applied to all of the symbols in the application period).

cᵢₙᵢₜ is configured individually for the UE, and thus the network (for example, the base station) may configure a scramble ID (for example, scramblingID) of cᵢₙᵢₜ by using higher layer signaling so that sequence hopping is not performed in the application period.

### <<UE Operation>>

The UE (for example, the new release UE) that supports the inter-time field OCC may multiply the value in the inter-time field OCC for each time field, and may measure the CSI-RS that is obtained by adding (in-phase synthesis) the results obtained through the multiplication.

The UE (for example, the old release UE) that does not support the inter-time field OCC or for which the inter-time field OCC is not configured may measure the CSI-RS that is obtained by adding receive signals of the time fields of the plurality of time fields.

The UE need not assume that the time and frequency resources of the CSI-RS to which the inter-time field OCC is applied overlap a part of the time and frequency resources of the CSI-RS of another UE.

All of the time and frequency resources of the CSI-RS to which the inter-time field OCC is applied and all of the time and frequency resources of the CSI-RS of another UE may overlap.

The duration (number of time fields) of the CSI-RS may be a multiple of the inter-time field OCC length.

By adding the receive signals for each time field over a multiple of the inter-time field OCC length, the old release UE can measure only the CSI-RS to which the inter-time field OCC is not applied (corresponding to the inter-time field OCC having a value of all + 1), and can remove the CSI-RSs corresponding to other inter-time field OCCs.

When the transmission bandwidth of the CSI-RS is not a multiple of the inter-time field OCC length, the UE may measure only the period of a multiple of the inter-time field OCC length out of the CSI-RS, and need not measure the other periods.

### [Measurement of Entire Resource Range]

In the same time and frequency resources as those of the CSI-RS to which the inter-time field OCC is applied or the CSI-RS to which the inter-time field OCC is not applied, the CSI-RS to which the inter-time field OCC is applied may be transmitted to another UE. The UE may measure the CSI-RS corresponding to a specific inter-time field OCC by receiving the CSI-RS in the resource range (for example, the period) to which the inter-time field OCC may be applied.

The UE for which the CSI-RS resources to which the inter-time field OCC (for example, [+1 +1]) having the value of all + 1 is applied are configured or the UE for which the CSI-RS resources to which the inter-time field OCC is not applied are configured may measure the CSI-RS in each time field without using the inter-time field OCC, if the CSI-RS of another UE multiplexed on the time and frequency resources of the CSI-RS is not transmitted.

If there is a possibility that the inter-time field OCC is applied, the UE cannot accurately measure the CSI-RS in each time field unless the UE knows the inter-time field OCC.

In the resource range in which there is a possibility that the inter-time field OCC is applied, by applying a specific inter-time field OCC having the value of all + 1 to the receive signals of the entire resource range, the UE may measure the CSI-RS corresponding to the specific inter-time field OCC.

The resource range in which there is a possibility that the inter-time field OCC is applied may be defined in a specification, or may be configured for the UE by using higher layer signaling. The resource range may be represented in the unit of two time fields (a pair of an even-numbered time field index and an odd-numbered time field index), in the unit of three time fields, or in the unit of four time fields. The UE may determine the resource range in which the inter-time field OCC is applied, based on the duration (number of symbols) of the configured CSI-RS resources.

Whether or not the inter-time field OCC is applied may be reported to the UE by using at least one of higher layer signaling, the MAC CE, and the DCI. The UE may switch reception operations according to the reporting. For example, the UE that has received reporting that the inter-time field OCC is not applied (or that the CSI-RS for another UE is not multiplexed on the time and frequency resources of the CSI-RS) may measure the CSI-RS in each of at least one time field in the resource range, or may perform in-phase synthesis on a plurality of time fields in the CSI-RS resources. For example, the UE that has received reporting that the inter-time field OCC is applied (or that the CSI-RS for another UE is multiplexed on the time and frequency resources of the CSI-RS) may identify the inter-time field OCC, based on the receive signals of all of the time fields, and measure the CSI-RS to which the identified inter-time field OCC is applied.

According to the present embodiment, by applying the inter-time field OCC to the CSI-RS over a plurality of time fields, the number of CSI-RSs (ports) to be subjected to orthogonalization (to be multiplexed) can be increased.

### <Third Embodiment>

Rel. 15 supports up to 32 CSI-RS ports by using 32 resources (REs, subcarriers × symbols) in one PRB. By increasing the number of time and frequency resources per PRB, the number of CSI-RS ports may be increased.

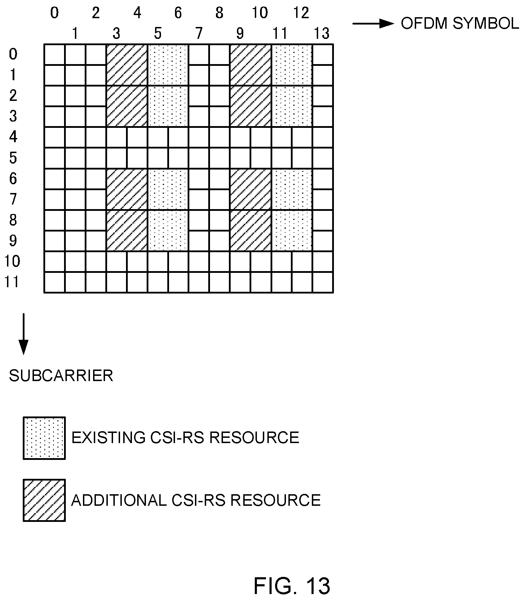

The UE may receive the CSI-RS by using at least one resource (time and frequency resource) that is not used for the CSI-RS (existing CSI-RS resource) according to Rel. 15. As shown in FIG. 13, for the existing CSI-RS resources, new CSI-RS resources (additional CSI-RS resources) may be defined for symbols #2, #3, #9, and #10. In this manner, the CSI-RS resources of 64 REs are used in one PRB, and can be associated with 64 ports.

At least one of the time domain OCC and the frequency domain OCC may be applied to the additional CSI-RS resources.

In order to maintain compatibility with Rel. 15, at least one (additional OCC) of the additional time domain OCC and the frequency domain OCC may be applied after at least one of the time domain OCC and the frequency domain OCC according to Rel. 15 is applied to the CSI-RS.

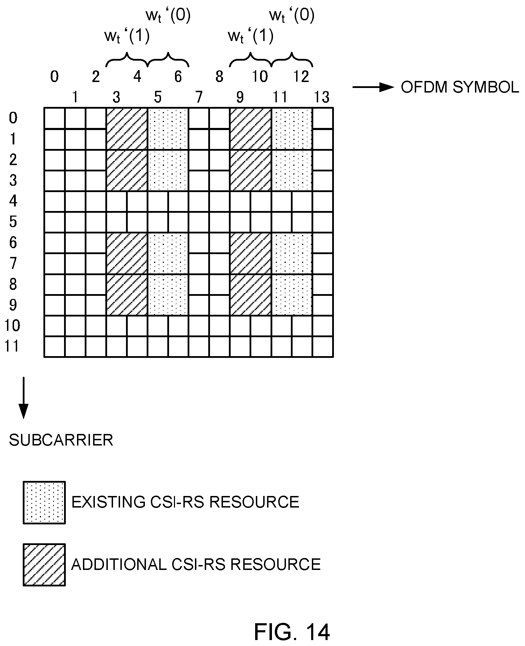

For example, as shown in FIG. 14, an additional time domain OCC wₜ'(m) is applied after at least one of the time domain OCC and the frequency domain OCC according to Rel. 15 is applied to the existing CSI-RS resource and the additional CSI-RS resource of FIG. 13. [wt_{'}(0) wₜ'(1)] may be [+1 +1] or [+1 -1]. Each value of the additional time domain OCC may be applied to every other symbol.

In the present example, wₜ'(0) is applied to symbols #4 and #5, wₜ'(1) is applied to symbols #2 and #3, wₜ'(0) is applied to symbols #11 and #12, and wₜ'(1) is applied to symbols #9 and #10.

The first value (for example, wₜ'(0)) of the additional OCC is constantly +1, the value of the CSI-RS does not change even when the additional OCC is applied, and thus the first value (for example, wₜ'(0)) of the additional OCC may be applied to the existing CSI-RS resources, and a value (for example, wₜ'(1)) later than the first value of the additional OCC may be applied to the additional CSI-RS resources. In this manner, the old release UE can measure the CSI-RS, and the number of ports of the new release CSI-RS can be increased.

[wₜ'(0) wₜ'(1)] may be applied in order from a large symbol index to a small symbol index, may be applied in order from a small symbol index to a large symbol index, and for example, wₜ'(0) may be applied to symbols #2 and #3 and wₜ'(1) may be applied to symbols #4 and #5.

According to the present embodiment, the number of time and frequency resources of the CSI-RS can be increased, and the number of CSI-RS ports can thus be increased.

### <Fourth Embodiment>

In Rel. 15, the UE does not assume that the REs of the CSI-RS and the REs of the DMRS are the same. In this manner, flexibility of the configuration of at least one of the CSI-RS and the DMRS is reduced.

The CSI-RS may be subjected to puncture.

In the present disclosure, "to puncture the CSI-RS," "not to map the CSI-RS to a part of the time and frequency resources of the CSI-RS," and "not to transmit a part of the CSI-RSs" may be interchangeably interpreted as each other.

In the resources to which the CSI-RS is not mapped due to puncture for a certain UE, a signal (for example, the CSI-RS) of another UE may be transmitted.

Puncture may be performed in the unit of the time and frequency resource having a certain size (for example, the component resource, the resource to which the frequency domain OCC is applied, and the resource to which the time domain OCC is applied).

Regarding the CSI-RS, the CSI-RS may be transmitted based on at least one of the following CSI-RS resource control methods 1 to 3.

### <<CSI-RS Resource Control Method 1>>

The NZP-CSI-RS may be subjected to puncture in a configured zero power (ZP)-CSI-RS. The NZP-CSI-RS may be mapped to resources except for the resources configured for the ZP-CSI-RS out of the resources configured for the NZP-CSI-RS.

When at least a part of the time and frequency resources of the ZP-CSI-RS and the time and frequency resources of the NZP-CSI-RS overlap, the UE need not receive the NZP-CSI-RS in the overlapping RE, need not receive the NZP-CSI-RS in the overlapping PRB, need not receive the ZP-CSI-RS in the overlapping RE, need not receive the ZP-CSI-RS in the overlapping PRB, need not assume that the DMRS is configured (or mapped) to the overlapping resource, may measure (receive) at least one of the ZP-CSI-RS and the NZP-CSI-RS in the resource when the DMRS is configured (or mapped) to the overlapping resource, and may measure (receive) the DMRS in the resource when the DMRS is configured (or mapped) in the overlapping resource.

### <<CSI-RS Resource Control Method 2>>

The UE may receive reporting of a bitmap indicating the position of puncture out of the time and frequency resources of the CSI-RS (for example, the position indicating at least one of time and frequency). The bitmap may be included in the CSI-RS resources. The UE may puncture the CSI-RS at the position indicated by the bitmap. The UE may puncture the NZP-CSI-RS or may puncture the ZP-CSI-RS at the position indicated by the bitmap.

Each bit in the bitmap may correspond to the RE (subcarrier), or may correspond to the PRB. The UE need not receive the NZP-CSI-RS in the RE indicated by the bitmap, or need not receive the NZP-CSI-RS in the PRB indicated by the bitmap. The UE need not receive the ZP-CSI-RS in the RE indicated by the bitmap, or need not receive the ZP-CSI-RS in the PRB indicated by the bitmap. The DMRS need not be configured (or mapped) for the resource indicated by the bitmap. The UE need not assume that the DMRS is configured (or mapped) for the resource indicated by the bitmap. The DMRS may be configured (or mapped) for the resource indicated by the bitmap, and the UE may perform reception or measurement of the DMRS in the resource indicated by the bitmap.

### <<CSI-RS Resource Control Method 3>>

When the CSI-RS is subjected to puncture based on CSI-RS resource control method 1 or 2, in the resource to which the CSI-RS is not mapped due to puncture, the PDSCH need not be transmitted (need not be mapped to the position of puncture).

In the resource to which the CSI-RS is not mapped due to puncture, the PDSCH may be subjected to rate match or puncture. The UE may assume that the PDSCH is subjected to rate match or puncture in the resource.

In the resource to which the CSI-RS is not mapped due to puncture, the PDSCH need not be subjected to rate match or puncture. The UE may assume that the PDSCH is not subjected to rate match or puncture in the resource. In the resource to which the CSI-RS is not mapped due to puncture, the PDSCH may be transmitted (the PDSCH may be mapped to the resource).

The UE may receive reporting of the position at which the PDSCH is subjected to rate match or puncture. The position at which the PDSCH is subjected to rate match or puncture may be reported as antenna port information, may be reported as a CDM group of the CSI-RS, may be reported as a subcarrier number (for example, k₀) and a symbol number (for example, l₀).

According to the present embodiment, with the CSI-RS being appropriately subjected to puncture and the resources to which the CSI-RS is not mapped due to puncture being appropriately processed, flexibility of the configuration of the CSI-RS can be enhanced.

### <Fifth Embodiment>

A plurality of groups of the CSI-RS resource (CSI-RS resource groups) may be associated with different groups of the CSI-RS ports (CSI-RS port groups).

The plurality of CSI-RS resource groups may be grouped by using at least one of the following CSI-RS resource grouping methods 1 and 2.

### <<CSI-RS Resource Grouping Method 1>>

Between the plurality of CSI-RS resource groups, at least one resource of the time and frequency for the CSI-RS may be different.

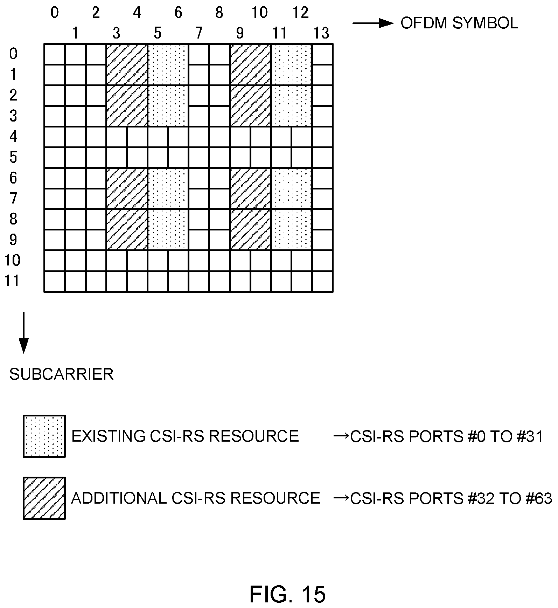

The plurality of CSI-RS resource groups may be multiplexed on each other by means of at least one of FDM and TDM. For example, as shown in FIG. 15, CSI-RS resource groups #0 and #1 may be subjected to TDM. CSI-RS resource group #0 may be associated with a group of CSI-RS ports #0 to #31, and CSI-RS resource group #1 may be associated with a group of CSI-RS ports #32 to #64. CSI-RS resource group #0 may be existing CSI-RS resources, and CSI-RS resource group #1 may be additional CSI-RS resources.

In the table as shown in FIG. 4, an entry (row) including a group of additional CSI-RS resources may be added. In the table, an entry indicating the number of ports larger than 32 may be added.

In the table indicating the existing CSI-RS resources and the additional CSI-RS resources, the additional CSI-RS resources may be added to both of an entry indicating the number of ports equal to or smaller than 32 (small number of ports) and an entry indicating the number of ports larger than 32 (large number of ports), and the additional CSI-RS resources may be added to only the entry indicating the large number of ports.

For the UE, the additional CSI-RS resources may be configured by using higher layer signaling. For the UE, the existing CSI-RS resources may be configured by using higher layer signaling, and the UE may determine the additional CSI-RS resources by using an offset of at least one of the time and frequency. For example, in the example of FIG. 15 described above, the UE may determine the additional CSI-RS resources by adding an offset of -2 symbols to the existing CSI-RS resources in the time direction.

The plurality of CSI-RS resource groups are subjected to orthogonalization with the time and frequency resources, and thus the UE can perform reception without using a new OCC, and can enhance compatibility with the old release UE.

### <<CSI-RS Resource Grouping Method 2>>

Between the plurality of CSI-RS resource groups, at least one of the CSI-RS sequence and the scramble ID for the initial value cᵢₙᵢₜ used for determination of the CSI-RS sequence may be different.

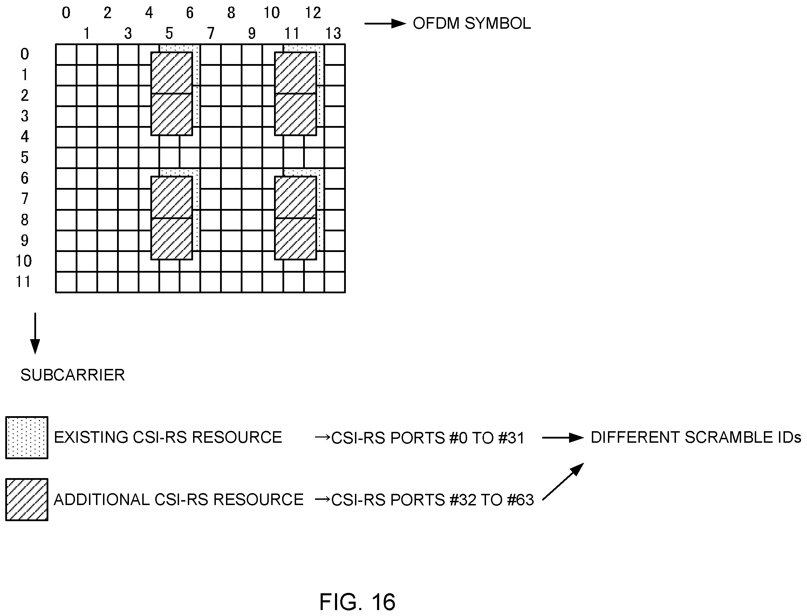

For example, as shown in FIG. 16, CSI-RS resource groups #0 and #1 may be associated with different scramble IDs. CSI-RS resource group #0 may be associated with a group of CSI-RS ports #0 to #31, and CSI-RS resource group #1 may be associated with a group of CSI-RS ports #32 to #64. CSI-RS resource group #0 may be existing CSI-RS resources, and CSI-RS resource group #1 may be additional CSI-RS resources.

Association between at least one of the CSI-RS sequence and the scramble ID and at least one of the CSI-RS resource and the CSI-RS port may be defined in a specification. For example, the CSI-RS of ports #0 to #X-1 may be determined based on the table (for example, FIG. 4) showing the existing CSI-RS resources and cᵢₙᵢₜ defined in the old release, and the CSI-RS of ports #X to #2X-1 may be determined based on the table and modified cᵢₙᵢₜ defined in the new release.

cᵢₙᵢₜ and modified cᵢₙᵢₜ may be based on different higher layer parameters (for example, different scramble IDs, scramblingID and scramblingID_2).

For the UE, the scramble ID (for example, different scramblingID) for cᵢₙᵢₜ may be configured, and the UE may calculate modified cᵢₙᵢₜ, based on the scramble ID by using operation different from cᵢₙᵢₜ. For example, the UE may calculate modified cᵢₙᵢₜ by using the value obtained by adding a specific value to the configured scramble ID for a cᵢₙᵢₜ calculation expression as the scramble ID for modified cᵢₙᵢₜ. The specific value may be a cell ID or the like. The UE may calculate modified cᵢₙᵢₜ by adding a specific value to the configured scramble ID and performing modulo operation.

In the table indicating the existing CSI-RS resources and the additional CSI-RS resources, the additional CSI-RS resources may be added to both of an entry indicating the number of ports equal to or smaller than 32 (small number of ports) and an entry indicating the number of ports larger than 32 (large number of ports), and the additional CSI-RS resources may be added to only the entry indicating the large number of ports.

The CSI-RS sequence (pseudo-random sequence) has a low correlation with other sequences, and thus all of or a part of the time and frequency resources (for example, the existing CSI-RS resources) of the CSI-RS associated with small port numbers (for example, numbers smaller than half of the number of ports) and the time and frequency resources (for example, the additional CSI-RS resources) of the CSI-RS associated with large port numbers (for example, numbers equal to or larger than half of the number of ports) may overlap.

For the UE, the additional CSI-RS resources may be configured by using higher layer signaling. For the UE, the existing CSI-RS resources may be configured by using higher layer signaling, and the UE may determine the additional CSI-RS resources by using an offset of at least one of the time and frequency. For example, in the example of FIG. 16 described above, the UE may determine the time and frequency resources of the additional CSI-RS by adding an offset of 0 symbols to the existing CSI-RS resources in the time direction and adding an offset of 0 PRB in the frequency direction. The UE may assume that the additional CSI-RS resources completely overlap the existing CSI-RS resources in the time and frequency.

The plurality of CSI-RS resource groups are distinguished with the CSI-RS sequence, and thus the UE can perform reception without using a new OCC, and can enhance compatibility with the old release UE. Even when the CSI-RS sequence (pseudo-random sequence) is not completely orthogonal, interference between ports can be reduced by applying different precoding (beams) to the ports.

### <Additional Notes>

The UE may acquire the CSI by measuring the CSI-RS by using the port to which at least one embodiment described above is applied.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

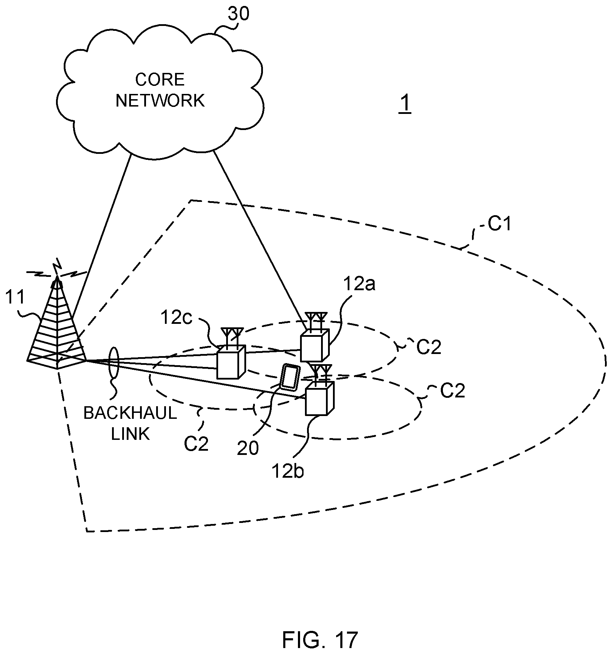

FIG. 17 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information is communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on are communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

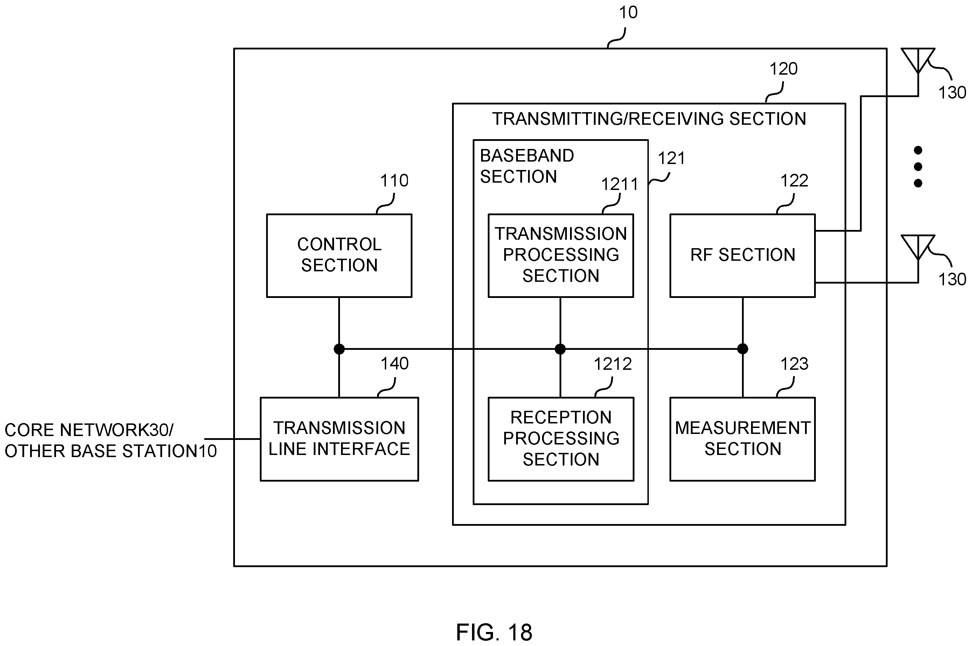

FIG. 18 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the control section 110 may receive a phase tracking reference signal (PTRS) for an uplink control channel (PUCCH) from the user terminal 20. The control section 110 may reduce (correct) phase noise of the PUCCH, based on the PTRS.

### (User Terminal)

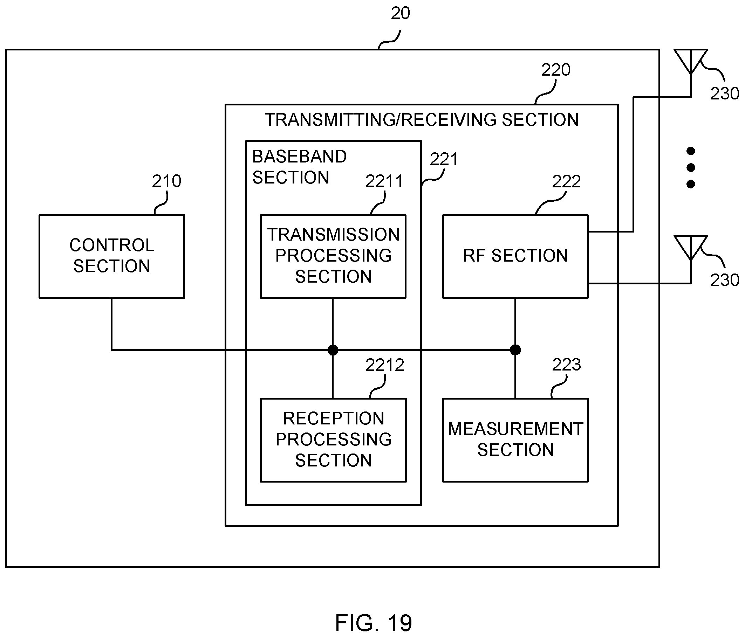

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a CSI-RS of at least one of a plurality of channel state information (CSI)-reference signals (RSs) each transmitted by using a plurality of antenna ports, the number of which is more than 32. The control section 210 may perform measurement by using the CSI-RS.

The CSI-RS may be mapped to a plurality of resources. A value in an orthogonal cover code may be applied to the CSI-RS for each resource in the plurality of resources. The resource may be time (for example, the time field) longer than a resource block (for example, a PRB) or a symbol.

The CSI-RS may be mapped to resource elements (for example, the additional CSI-RS resources) not used for the CSI-RS according to release 15 (third embodiment).

The CSI-RS may be transmitted in a part of a plurality of the resource elements configured for the CSI-RS (for example, puncture) (fourth embodiment).

At least one of a time resource (for example, the symbol) of the CSI-RS, a frequency resource (for example, the RE) of the CSI-RS, and a configuration value (for example, the scramble ID) for a sequence of the CSI-RS may depend on whether or not a number of each of the plurality of antenna ports used for transmission of the CSI-RS is larger than a specific number (fifth embodiment).

The transmitting/receiving section 220 may receive a signal over a plurality of resources (for example, the resource range). The control section 210 may multiply the received signal by a value in an orthogonal cover code (OCC) for each resource in the plurality of resources, and may measure a channel state information (CSI)-reference signal (RS) obtained by adding results of the multiplication. The resource may be a period longer than a resource block or a symbol (first embodiment/measurement of entire resource range).

All of values of the OCC may be +1.

The plurality of resources may be configured for the terminal by using higher layer signaling.

When the receiving section receives information indicating that the OCC is applied to the plurality of resources, the control section may perform the multiplication.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

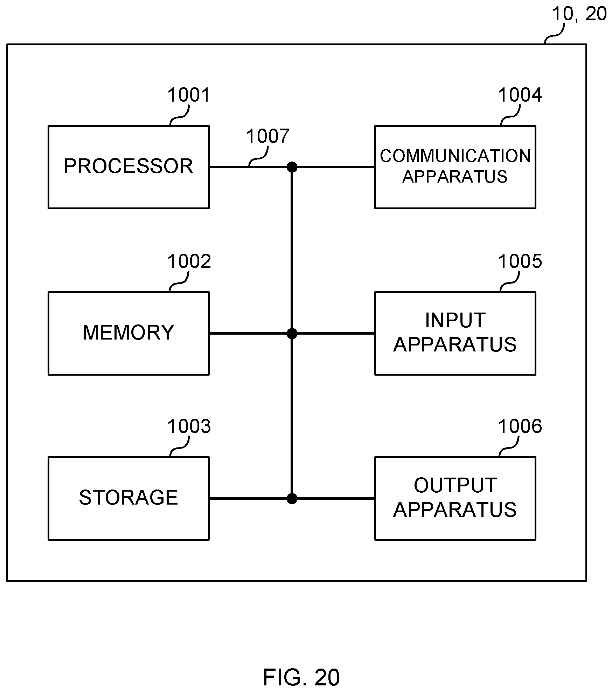

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.
Further preferred embodiments of the present invention are E1 to E6 as follows:
E1. A terminal comprising:
   a receiving section that receives a channel state information (CSI)-reference signal (RS) of at least one of a plurality of CSI-RSs each transmitted by using a plurality of antenna ports, the number of which is more than 32; and
   a control section that performs measurement by using the CSI-RS.
E2. The terminal according to embodiment E1, wherein
   the CSI-RS is mapped to a plurality of resources,
   a value in an orthogonal cover code is applied to the CSI-RS for each resource in the plurality of resources, and
   the resource is time longer than a resource block or a symbol.
E3. The terminal according to embodiment E1 or E2, wherein
   the CSI-RS is mapped to a resource element not used for the CSI-RS according to release 15.
E4. The terminal according to any one of embodiments E1 to E3, wherein
   the CSI-RS is transmitted in a part of a plurality of resource elements configured for the CSI-RS.
E5. The terminal according to any one of embodiments E1 to E4, wherein
   at least one of a time resource of the CSI-RS, a frequency resource of the CSI-RS, and a configuration value for a sequence of the CSI-RS depends on whether or not a number of each of the plurality of antenna ports used for transmission of the CSI-RS is larger than a specific number.
E6. A radio communication method for a terminal, the radio communication method comprising:
   receiving a channel state information (CSI)-reference signal (RS) of at least one of a plurality of CSI-RSs each transmitted by using a plurality of antenna ports, the number of which is more than 32; and
   performing measurement by using the CSI-RS.

## Claims

1. A terminal (20) comprising:
a receiving section (220) configured to receive higher layer signaling indicating a time-domain offset between a first Channel State Information Reference Signal, CSI-RS, resource and a second CSI-RS resource; and
a control section (210) configured to control reception of at least one CSI-RS by using the first CSI-RS resource and the second CSI-RS resource that are determined based on the higher layer signaling,
wherein a plurality of CSI-RS ports are associated with the first CSI-RS resource, and different CSI-RS ports, equal in number to the plurality of CSI-RS ports, are associated with the second CSI-RS resource.

2. The terminal according to claim 1, wherein the number of the plurality of CSI-RS ports is 32.

3. The terminal according to claim 1, wherein the higher layer signaling includes different scrambling IDs respectively corresponding to the first CSI-RS resource and the second CSI-RS resource.

4. The terminal according to claim 1, wherein using the first CSI-RS resource and the second CSI-RS resource together increases a number of CSI-RS ports available for receiving the at least one CSI-RS.

5. A radio communication method of a terminal (20), comprising:
receiving higher layer signaling indicating a time-domain offset between a first Channel State Information Reference Signal, CSI-RS, resource and a second CSI-RS resource; and
controlling reception of at least one CSI-RS by using the first CSI-RS resource and the second CSI-RS resource that are determined based on the higher layer signaling,
wherein a plurality of CSI-RS ports are associated with the first CSI-RS resource, and different CSI-RS ports, equal in number to the plurality of CSI-RS ports, are associated with the second CSI-RS resource.

6. A base station (10) comprising:
a transmission section (120) configured to transmit higher layer signaling indicating a time-domain offset between a first Channel State Information Reference Signal, CSI-RS, resource and a second CSI-RS resource for determining the first CSI-RS resource and the second CSI-RS resource in a terminal; and
a control section (110) configured to control transmission of at least one CSI-RS using the first CSI-RS resource and the second CSI-RS resource,
wherein a plurality of CSI-RS ports are associated with the first CSI-RS resource, and different CSI-RS ports, equal in number to the plurality of CSI-RS ports, are associated with the second CSI-RS resource.

7. A system (1) comprising the terminal (20) according to any one of claims 1 to 4 and a base station (10), wherein the base station comprises:
a transmission section (120) configured to transmit the higher layer signaling.
